# EUROPÄISCHE PATENTANMELDUNG

(11) **EP 0 685 162 A1**
(43) Veröffentlichungstag der Anmeldung: **06.12.1995**
(21) Anmeldenummer: 95103288.7
(22) Anmeldetag: 08.03.1995
(51) Int. Cl.: A21B 3/07, A21B 3/15

(54) **Backofen**

(30) Priorität: 31.05.1994 CH 1694/94
(71) Anmelder: Werner & Pfleiderer Lebensmitteltechnik GmbH, D-91550 Dinkelsbühl (DE)
(72) Erfinder: Dannenhauer, Bernd, D-91550 Dinkelsbühl (DE); Linssen, Peter, NL-5935 BE Steyl (NL)
(74) Vertreter: Rau, Manfred, Dr. Dipl.-Ing.

(57) **Zusammenfassung**

Bei einem Backofen, insbesondere einem Etagenbackofen, mit einer Mehrzahl von übereinander angeordneten Herden, wobei jeder Herd eine Backfläche aufweist und am vorderen Ende jeder Backfläche eine Herdklappe angeordnet ist, ist zur Bewerkstelligung einer Entleerung des fertigen Backgutes unter weitgehender Vermeidung manueller Tätigkeiten vorgesehen, daß vor jeder Herdklappe (5) eine Wickelwelle (7) mit einer Bahn aus einer hitzebeständigen Folie (8) derart angeordnet ist, daß sich die Folie unter Abwickeln der Wickelwelle (7) von der Herdklappe (5) aus nach hinten über die Backfläche (6) ziehen und unter Aufwickeln der Wickelwelle (7) in Richtung auf die Herdklappe (5) zu herausziehen läßt.

## Beschreibung

Die Erfindung richtet sich auf einen Backofen, insbesondere einen Etagenbackofen mit einer Mehrzahl von übereinander angeordneten Herden, wobei jeder Herd eine Backfläche aufweist und am vorderen Ende jeder Backfläche eine Herdklappe angeordnet ist.

Derartige Backöfen werden verwendet, um führ gewerbliche Zwecke größere Mengen von Backgut gleichzeitig zu backen. Zum Beschicken dieser Backöfen ist es bereits bekannt, das zu backende Gut mittels förderbandartiger Tuchabziehapparate auf die Backfläche zu bringen. Demgegenüber erfolgt die Entleerung des fertigen Backgutes aus den Herden herkömmlicherweise noch manuell oder mittels eines von Hand betätigten sogenannten Ausbackrechens. Ein solches rechenartiges Rohrgestell ermöglicht jedoch nur die gleichzeitige vollständige Entleerung eines Herdes und erfordert einen gewissen Krafteinsatz bei der Handhabung.

Hiervon ausgehend liegt der Erfindung die Aufgabe zugrunde, die Entleerung des fertigen Backgutes aus einem Backofen unter weitgehender Vermeidung manueller Tätigkeiten, d.h. kräfteschonend, zu ermöglichen, wobei auch eine individuelle Entleerung einzelner Herdbahnen realisierbar sein soll.

Diese Aufgabe wird erfindungsgemäß dadurch gelöst, daß vor jeder Herdklappe eine Wickelwelle mit einer Bahn aus einer hitzebeständigen Folie derart angeordnet ist, daß sich die Folie unter Abwickeln der Wickelwelle von der Herdklappe aus nach hinten über die Backfläche ziehen und unter Aufwickeln der Wickelwelle in Richtung auf die Herdklappe zu herausziehen läßt.

Durch die erfindungsgemäße Ausgestaltung ist es möglich, vor jedem Backvorgang auf der Backfläche in einfachster Weise die hitzebeständige Folie auszuspannen und hierauf das Backgut anzuordnen, wobei nach Beendigung des Backvorganges die Folie und mit ihr das darauf befindliche fertige Backgut rückholbar ist. Es ist dementsprechend möglich, das Backgut direkt von der Folie in einen unterhalb derselben auf einem höhenverstellbaren Entladewagen angeordneten Auffangkorb zu entleeren.

In weiterer Ausgestaltung der Erfindung kann vorgesehen sein, daß an dem äußeren Ende der Folie ein Mitnahmeanschlag angeordnet ist. Dieser ermöglicht das Spannen der Folie über die Backfläche, wobei im Falle einer Beschickung mit Hilfe eines Tuchabziehapparates beim Einführen desselben der Mitnahmeanschlag nach hinten bewegt und daher automatisch die Folie ausgezogen wird.

Zum Aufwickeln der Folie und damit zum Ausfahren des fertigen Backgutes ist günstigerweise ein Motor zum Antrieb der Wickelwelle vorgesehen.

Zwischen Motor und Wickelwelle ist mit Vorteil ein Freilauf derart angeordnet, daß die Freilaufrichtung der Abwickelrichtung der Wickelwelle entspricht und dementsprechend das Ausziehen der Folie manuell oder beim Einfahren des Tuchabziehapparates erfolgen kann.

Für eine Mehrzahl von horizontal nebeneinanderliegenden Backbahnen können jeweils zugeordnete und individuell antreibbare Folien-Wickelwellen vorgesehen sein, so daß unterschiedliche Backbahnen nacheinander entsprechend dem jeweiligen Backfortschritt entleert werden können.

Vorteilhafterweise ist der Motor über einen Schalter mit nachgeordnetem Zeitglied für eine definierte Zeitspanne entsprechend der Transportdauer vom hinteren Ende der Backfläche zum vorderen Ende der Backfläche einstellbar. Dementsprechend werden das Folienende und der Mitnahmeanschlag automatisch in die jeweilige Endposition für den nächsten Beschickungsvorgang gebracht, ohne daß die Bedienungsperson hierauf eine besondere Aufmerksamkeit verwenden müßte.

Nachfolgend wird die Erfindung anhand eines bevorzugten Ausführungsbeispieles in Verbindung mit der Zeichnung näher erläutert. Dabei zeigen
- Fig. 1: eine schematische Seitenansicht eines erfindungsgemäßen Etagen-Backofens und
- Fig. 2: eine schematische Aufsicht auf den Backofen nach Fig. 1.

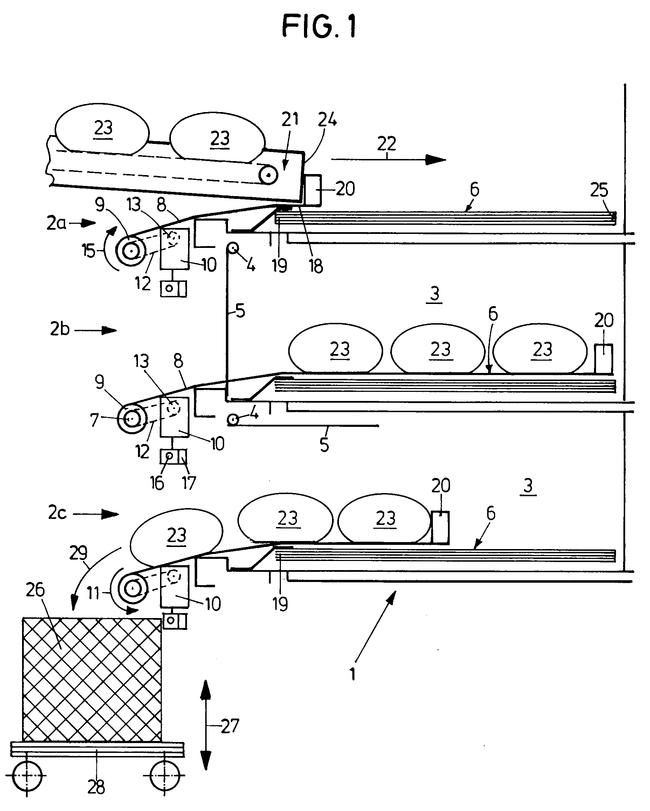

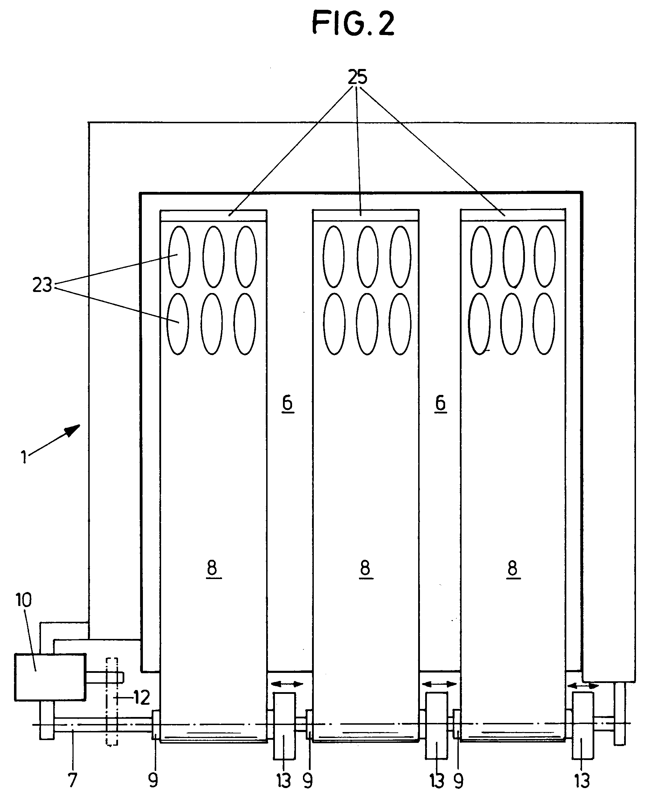

Ein in Fig. 1 und 2 dargestellter Etagenbackofen 1 umfaßt eine Mehrzahl von übereinander angeordneten Herden 2. Jeder Herd 2 weist einen Backraum 3 auf, der durch eine um eine horizontale Achse 4 schwenkbare Herdklappe 5 verschließbar ist. An der Unterseite des Backraumes 3 befindet sich jeweils eine horizontale Backfläche 6.

Vor jeder Herdklappe 5 etwas unterhalb der Backfläche 6 ist eine horizontale Wickelwelle 7 angeordnet, auf der eine hitzebeständige Teflon-Folie 8 auf eine die Wickelwelle 7 umgebende Walze 9 auf- bzw. von dieser abwickelbar ist.

Die Wickelwelle 7 ist über einen Elektromotor 10 in Richtung des Pfeils 11 drehantreibbar, wobei die Kraftübertragung von dem Elektromotor 10 über einen schematisch angedeuteten Zahnriemen 12 und einen dem Motor 10 nachgeordneten Freilauf 13 erfolgt, dessen Freilaufrichtung (Pfeil 15) der Antriebsrichtung des Motors 10 entgegengesetzt ist.

Der Elektromotor 10 wird durch einen Schalter 16 eingeschaltet, der ein Zeitglied 17 startet, so daß der Motor 10 automatisch gesteuert nur eine definierte Zeit läuft.

Das Beschicken und Entleeren eines derart ausgestalteten Backofens 1 wird wie folgt bewerkstelligt:

Im Ausgangszustand ist, wie in Verbindung mit dem Herd 2a dargestellt, die Folie 8 weitgehend aufgewickelt, so daß das äußere Ende 18 im Bereich des vorderen Endes 19 der Backfläche liegt. An dem vorderen Ende 18 der Folie 8 ist ein Mitnahmeanschlag 20 angeordnet.

Es wird nun ein an sich bekannter Tuchabziehapparat 21 mit zu backendem Gut 22 so herangeführt und parallel zu der Backfläche 6 in Richtung des Pfeils 23 eingeschoben, daß das Vorderende 24 des Tuchabziehapparates 21 an dem Mitnahmeanschlag 20 zu liegen kommt und dementsprechend die Folie 8 in Freilaufrichtung (Pfeil 15) des Freilaufs 13 von der Walze 9 bzw. der Wickelwelle 7 abgezogen wird, so daß die Folie 8 auf der Backfläche 6 und hierauf wiederum das zu backenden Gut 23 zu liegen kommt. In der Endposition befindet sich der Mitnahmeanschlag 20 im Bereich des inneren Endes 25 der Backfläche 6. Der Tuchabziehapparat 21 wird dann wieder herausgefahren und es ergibt sich eine Situation, wie sie in Verbindung mit dem Herd 2b dargestellt ist, d.h. die Herdklappe 5, die zum Beschickungsvorgang geöffnet war, wird geschlossen und der Backvorgang kann beginnen, wobei das Backgut 23 während des gesamten Backvorgangs auf der Folie 8 verbleibt.

Nach Beendigung des Backvorganges wird, wie in Verbindung mit dem Herd 2c dargestellt, die Herdklappe 5 wieder geöffnet. Es wird nun ein Auffangkorb 26 auf einem in Richtung des Pfeils 27 höhenverstellbaren Wagen 28 herangefahren, wobei die Breite des Wagens der Breite der Folie 8 entspricht und der Wagen 28 jeweils vor oder unter jeder Walze 9 in der entsprechenden Höhe positioniert wird. Es wird dann der Schalter 16 betätigt, der das Zeitglied 17 aktiviert, so daß über den Motor 10 die Walze 9 in Richtung des Pfeils 11 genau so lange angetrieben wird, bis die Folie 8 und der an ihrem Ende 25 angeordnete Mitnahmeanschlag 20 zum vorderen Ende 19 der Backfläche 6 transportiert sind, d.h. in die in Verbindung mit dem Herd 2a dargestellte Position, wobei das fertige Backgut 23 in Richtung des Pfeils 29 in den Auffangkorb 26 selbsttätig entleert wird. Hieran anschließend kann dann eine erneute Beladung mittels des Tuchabziehapparetes 21 erfolgen.

## Patentansprüche

1. Backofen, insbesondere Etagenbackofen mit einer Mehrzahl von übereinander angeordneten Herden, wobei jeder Herd eine Backfläche aufweist und am vorderen Ende jeder Backfläche eine Herdklappe angeordnet ist, dadurch gekennzeichnet, daß vor jeder Herdklappe (5) eine Wickelwelle (7) mit einer Bahn aus einer hitzebeständigen Folie (8) derart angeordnet ist, daß sich die Folie unter Abwickeln der Wickelwelle (7) von der Herdklappe (5) aus nach hinten über die Backfläche (6) ziehen und unter Aufwickeln der Wickelwelle (7) in Richtung auf die Herdklappe (5) zu herausziehen läßt.

2. Backofen nach Anspruch 1, dadurch gekennzeichnet, daß an dem äußeren Ende der Folie (8) ein Mitnahmeanschlag (20) angeordnet ist.

3. Backofen nach Anspruch 1, dadurch gekennzeichnet, daß die Wickelwelle (7) wenigstens in Ausziehrichtung mittels eines Motors (10) antreibbar ist.

4. Backofen nach Anspruch 3, dadurch gekennzeichnet, daß zwischen Motor (10) und Wickelwelle (7) ein Freilauf (13) derart angeordnet ist, daß die Freilaufrichtung (Pfeil 15) der Abwickelrichtung der Wickelwelle (7) entspricht.

5. Backofen nach Anspruch 1, dadurch gekennzeichnet, daß für eine Mehrzahl von horizontal nebeneinander liegenden Backbahnen jeweils eine zugeordnete, individuell antreibbare Folien-Wickelwelle (7) vorgesehen ist.

6. Backofen nach Anspruch 1 und 3, dadurch gekennzeichnet, daß der Motor (10) über einen Schalter (16) mit nachgeordnetem Zeitglied (17) für eine definierte Zeitspanne entsprechend der Transportdauer vom hinteren Ende (25) der Backfläche (6) zum vorderen Ende (19) der Backfläche (6) einschaltbar ist.
